# EUROPEAN PATENT APPLICATION

(11) **EP 4 269 007 A1**
(43) Date of publication of application: **01.11.2023**
(21) Application number: 22472003.7
(22) Date of filing: 28.04.2022
(51) Int. Cl.: B23C 3/28, B23C 5/08, B28D 1/18, E04F 13/08, E04F 13/14

(54) **SLOTTING TOOL FOR CLADDING PANELS, METHOD FOR SLOT MILLING INTO A CLADDING PANEL, CLADDING PANEL AND METHOD FOR FASTENING OF CLADDING PANELS TO A LOAD-BEARING SUBCONSTRUCTION OF BUILDING**

(71) Applicant: Stoyanov, Damian Vassilev, 1000 Sofia (BG)
(72) Inventor: Stoyanov, Damian Vassilev, 1000 Sofia (BG)
(74) Representative: Benatov, Samuil Gabriel

(57) **Abstract**

The slotting tool (1) for cladding panels (7), the method for slot milling into a cladding panel (7), the cladding panel (7) and the method for fastening of cladding panels (7) to a load-bearing subconstruction of a building, according to the invention, are applicable in the field of construction, for example during the construction of ventilated façades. By the use of a slotting tool (1) with two parallel slotting discs (2, 3), located on a shaft (4) at a distance from each other, at least a pair of slot (14) and groove (15) are milled, whereas the groove (15) is milled by taking away material through one of the slotting discs (2) of the slotting tool (1) from the second facing side (9) of the panel (7), while its parallel slot (14) is made by milling from the other slotting disc (3) of the slotting tool (1) in an area of one of the lateral sides (10) of the panel (7), located between the middle of the width of the lateral side (10) and the first facing side (8) of the panel (7).

## Description

### TECHNICAL FIELD

The slotting tool for cladding panels, the method for slot milling into a cladding panel, the cladding panel and the method for fastening of cladding panels to a load-bearing subconstruction of a building, more specifically, for instance, to a ventilated façade of a building, according to the invention, are applicable in the construction field, for instance during the construction of ventilated façades.

### STATE OF THE ART

In the state of the art, different methods for mechanical fastening of cladding panels to load-bearing subconstructions of buildings are known.

One of them is fastening of the panel through side milled slots. In the slotted places, the cladding panels must have certain mechanical characteristics, i.e., are subjected to wind load. According to EN 1991-1-4:2005+A1, depending on the wind direction and the building configuration, the cladding panels are subjected to inward, as well as outward wind pressure. The maximum outward wind pressure (suction) according to the standard is even higher by 40% compared to the inward pressure (direct impact). Because of the specified wind loads on both sides of the cladding panel, the panel fastening slots are milled in the middle of the panel thickness. During direct wind load, the exertion is handled by the front part of the panel before the slot, and during suction from the wind, the exertion is handled by the back part of the panel - after the slot.

For ceramic cladding panels there are solutions, in which the panel is fastened to a load-bearing subconstruction by at least one holder with two parallel fastening ribs, and one of the fastening ribs of each holder is inserted into its respective slot, milled on a lateral side of the cladding panel. In the known solutions, the slot is moved closer to one of the facing sides of the panel. In doing so, the panel holder with its one fastening rib enters the slot and with the other fastening rib it holds the panel from the back side. The thickness of the panel between the slot and its back side is equal to the width between the two fastening ribs of the holder. Thus, the force from the wind pressure during direct impact and suction is handled by the thickened rear part of the panel past the slot. The front part of the panel before the slot does not handle any loads and can have a minimum technological thickness. Because of the thickening, the rear part of the panel past the slot gains higher strength characteristics and increases the reliability of the construction. There is a requirement for panel slot milling that stipulates the distance from the slot to the facing side of the panel to be the same for all panels, i.e., the face of the façade to be located in the same plane. Accordingly, this technology can currently be applied only to ceramic panels due to the fact that they are industrially produced and have equal thickness. The technology cannot be applied to panels of natural materials, such as marble, granite, limestone and other, because it is known that during production of natural material panels, their thickness is incredibly variable. Because of this difference in thicknesses after the slot milling, the back side of the panel (from the slot to the back side) has a different width. This does not allow the back side of the panel to be clasped between the two fastening ribs of the holder. This fact does not allow the technology for displacing the slot and thickening of the back side of the panel to be applied to natural material panels.

### TECHNICAL SUMMARY OF THE INVENTION

The task of the invention is to create a tool and a method for slot milling into natural material panels, so that the strength characteristics of the mechanically fastened cladding panels are increased through mortise slot fastening by moving the slot and clasping the panel in the rear side.

This task is completed through the creation of a slotting tool for cladding panels, including a shaft with an immovably fixed slotting disc. A second slotting disc is also immovably fixed to it, parallel to the first disc and located near it. The distance between the discs is determined in accordance with the desired minimal thickness of the cladding panels.

It is preferable for both slotting discs to have the same diameter.

It is preferable for the first slotting disc to be welded to one end of the shaft, and the second slotting disc is welded to a collet holder, located on the shaft with a possibility to move it along the shaft.

It is possible for both slotting discs to be welded to the shaft and have a slotting sleeve with at least one longitudinally positioned, parallel to the axis of the slotting sleeve, slotting edge, wherein the diameter of the slotting sleeve is smaller than the diameter of the slotting discs. This embodiment is suitable, when the distance from the end of the groove, formed by one of the slotting discs to the end of the panel is minimal.

According to the invention, a method for slot milling into a cladding panel is created, which has four lateral sides and two opposing facing sides, first and second facing side, respectively, that method being the milling of at least one slot in at least one lateral side of the cladding panel by a machine with a slotting tool attached to it. By the use of the slotting tool, according to the invention, at least one pair of parallel slot and groove are milled. The distance between the discs of the slotting tool is bigger than half the thickness of the cladding panel. The groove is formed by removal of material by the use of one of the slotting discs of the slotting tool from the second facing side of the panel, and its parallel slot is formed through milling by the other slotting disc of the slotting tool in an area of one of the lateral sides of the panel, located between the middle of the width of the lateral side and the first facing side of the panel. The moving of the slot to the first facing side of the panel allows for thickening of the back side of the panel, from the slot to the second facing side, by up to 50%, which, respectively, increases the strength indices of the panel in the fastening position and the reliability of the overall construction.

It is preferable for the slot and the groove to correspond in shape.

According to the invention, on a lateral side of the cladding panel is where at least two pairs of slot and groove are milled, where all slots are milled at the same distance from the first facing side of the panel.

In an embodiment of the invention, the slotting tool has a slotting sleeve with at least one longitudinally positioned, parallel to the axis of the slotting sleeve, slotting edge, which, during the slot milling, slots a U-shaped groove between each pair of parallel slot and groove, in which the depth of each slot is bigger than the radius of the slotting discs of the slotting tool.

According to the invention, a cladding panel is manufactured with four lateral sides and two opposing facing sides, first and second facing side, respectively, that panel being manufactured through the method according to the invention. On at least one of the lateral sides there is at least one milled pair of parallel slot and groove. It is preferable for the slot and groove to correspond in shape. The groove is milled on the second facing side of the panel adjacent to the lateral side, and the parallel slot is milled in an area of the mentioned lateral side of the panel, reliability of the façade located between the middle of the width of the lateral side and the first facing side of the panel. The distance between the second facing side of the panel with a milled groove and its respective parallel slot is bigger than the distance between the first facing side and the slot. The milling of the slot into a lateral side of the panel with an offset from the middle part of the lateral side, so that it is closed to one of the facing sides, and on the opposite one, a groove is milled that ensures a thickness increase as well as an increase in the strength indices of the back side of the panel, between the slot and the second facing side of the panel, which handles the wind load from both sides.

In an embodiment of the invention, on at least one of the lateral sides of the cladding panel there are at least two pairs of slot and groove, where all slots and grooves are located at the exact same distance from the first facing side of the panel.

In an embodiment of the invention, between each pair of parallel slot and groove, a U-shaped groove is milled, where the depth of each slot and each groove is bigger than half the width of the slots and grooves.

It is preferable for the cladding panel to be made of a natural material.

It is preferable for the panel thickness between the slot and its first facing side to be bigger than or equal to 1,5 mm and smaller than or equal to 3 mm.

According to the invention, a method is also created for fastening of cladding panels to a load-bearing subconstruction of a building, where, laterally, on at least one cladding panel, slots are milled with a slotting tool and through those slots, the at least one cladding panel is fastened to the load-bearing subconstruction through holders with two fastening ribs, the surfaces of which, coming into contact with at least one of the cladding panel, are located in two parallel planes, and one of the fastening ribs of each holder is inserted into one of the mentioned slots of the cladding panel. The at least one cladding panel is in accordance with the invention, where at least one pair of parallel slot and groove are milled laterally into the at least one cladding panel by the use of a slotting tool according to the invention. The second facing side of the at least one cladding panel, into which the groove is milled, is positioned against the load-bearing subconstruction. The distance between at least of the pairs of slot and groove is equal to the width between the fastening ribs of the cladding panel holder. One of the fastening ribs of the holder is inserted into the slot of the cladding panel, and the other fastening rib is inserted into the groove of the second facing side of the cladding panel. The depth of the at least one pair of slot and groove is equal to or greater than the height of the fastening ribs of the holder.

The advantages of the invention are:
- Significantly higher reliability of the façade construction due to the increased strength indices of the back side of the panel that bears wind load from both sides;
- Possibility for thickness decreasing of the cladding panel and saving material;
- In the case of decreased cladding panel thickness and weight, respectively, there is an option to manufacture a lighter load-bearing subconstruction of the façade system and saving materials and labour;
- Possibility for processing of a natural material cladding panel, in accordance with established standards.

### BRIEF DESCRIPTION OF THE FIGURES

Further into the description, the cladding panel, the slotting tool for cladding panels and the methods, objects of the invention, are clarified through preferred embodiments, listed as examples that do not limit the scope of the invention, with reference to the attached figures, where:
Figure 1 is a side view of a preferred embodiment of the slotting tool, according to the invention.
Figure 2 is a side view of another embodiment of the slotting tool with a slotting sleeve, according to the invention.
Figure 3 is a panel with milled slot and groove with the slotting tool from fig. 2.
Figure 4 is a panel with milled slot and groove with the slotting tool from fig. 1.
Figure 5 is a partial side view of two cladding panels, fastened to a load-bearing profile subconstruction of a ventilated façade, according to a preferred embodiment of the invention.
Figure 6 is a partial transverse section of an embodiment of a cladding panel, fastened to a load-bearing profile subconstruction of a ventilated façade through a holder.
Figure 7 is a partial transverse section of a second embodiment of a cladding panel, fastened to a load-bearing profile subconstruction of a ventilated façade through a holder.
Figure 8 is a partial transverse section of a third embodiment of a cladding panel, fastened to a load-bearing profile subconstruction of a ventilated façade through a holder.

### EXEMPLARY EMBODIMENT OF THE INVENTION

In the current description, "front part" A of the panel 7 refers to that part of the thickness of the panel 7, located between the plane of the slot 14 and the first facing side 8 of the panel 7, wherein under "rear part" B of the panel 7 refers to that part of the thickness of the panel 7, located between the plane of the slot 14 and the second facing side 9 of the panel 7.

The slotting tool and the method for slot milling into natural material panels, according to the invention, are used for increasing the strength characteristics of mechanically fastened cladding panels through mortise fastening by moving the slot and clasping the panel 7 in the rear part B.

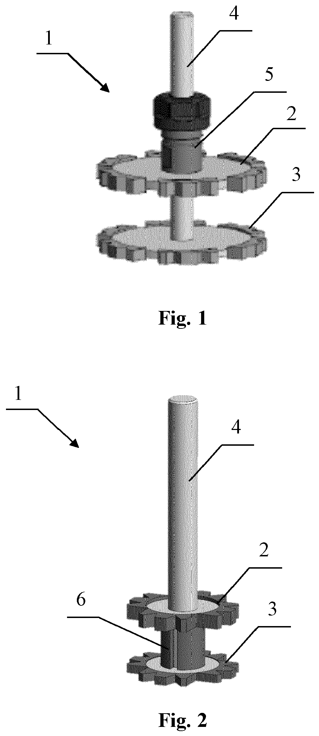

As shown in fig. 1, the slotting tool 1 for cladding panels includes a shaft 4 with an immovably fixed first slotting disc 2 to it. A second slotting disc 3 is immovably fixed to the shaft 4, parallel to the first slotting disc 2 and at a distance from it. Both discs 2, 3 are designed for milling a slot 14 into a lateral side 10 of a cladding panel 7 and a groove 15, parallel to the slot 14 into the facing sides 9 of the panel 7. The distance between the discs 2, 3 is determined in conformity with the thickness of the cladding panels and the desired minimal distance between the slot 14 and the facing side of the cladding panel 7.

It is preferable for both slotting discs 2, 3 to have an equal diameter. Alternatively, they can have a different diameter, if the slot 14 and groove 15, milled by them have to have a different diameter, for example in case the holder 13 for a panel 7 that is being used has fastening ribs 11, 12 of different sizes.

The slotting discs 2, 3 are, preferably, diamond discs, but it is possible to use other types of discs, based on the state of the art.

It is preferable for the discs 2, 3 to be welded to the shaft 4, but alternatively, the shaft 4 and the discs 2,3 can be manufactured as one and subsequently weld diamond plates to the discs 2,3.

The diameter of the discs 2, 3 is determined by the required slotting depth. For example, in order to place a holder 13 for a panel 7 with fastening ribs 11, 12 with a rectangular plate 25x11 mm in the milled slots 14 and grooves 15 of the panel 7, the diameter of the discs 2, 3 must be 58 mm, in case the diameter of the shaft 4 is 8 mm.

Aside from a square shape, the fastening ribs 11, 12 can have a rectangular or semicircular or another suitable shape.

It is preferable for the first slotting disc 2 to be welded to one end of the shaft 4, and the second slotting disc 3 is welded to a collet holder 5, located on the shaft 4 with a possibility for repositioning along the shaft 4. Thus, an opportunity is secured to adjust the distance between the two discs 2, 3 and the milling of slots 14 into cladding panels 7 with different thicknesses. After the necessary repositioning of the disc 3, the collet 5 is tightened with a nut, thus the distance is fixed.

Alternatively, it is possible for both discs 2, 3 to be welded to the shaft 4, where the distance between them is fixed.

As shown in fig. 2, it is possible for both slotting discs 2, 3 to be welded to the shaft 4 and have a slotting sleeve 6 welded to the shaft 4 between them with at least one longitudinally positioned parallel to the axis of the slotting sleeve, slotting edge, where the diameter of the slotting sleeve 6 is smaller than the diameter of the slotting discs. For example, the slotting sleeve 6 can have an outer diameter over 10 mm, for instance 10.5 mm, 11 mm or another size, with a shaft 4 diameter of 8 mm. This embodiment is suitable, when the distance from the end of the milled slot 14 to the first facing side 8 of the panel 7 is minimal. The aim of this sleeve 6 is to mill a groove, into which the shaft 4 of the tool 1 is inserted, so that deeper slot 14 and groove 15 are milled. During the use of a sleeve 6, it is possible for the diameter of the discs 2, 3 to be smaller than 58 mm. This enables an opportunity to decrease the length of the slot and if the slot is close to the end of the panel 7, it prevents the panel 7 from cracking in the corner from the slot to the end of the panel 7.

For example, it is possible to place a holder 13 for a panel 7 with fastening ribs 11, 12 with a square plate 20x20 mm in milled slots 14 and grooves 15 into the panel 7 through a slotting tool 1 with a slotting sleeve 6, according to the invention, where the diameter of the discs 2, 3 must be 25 mm, in case the shaft 4 diameter is 8 mm.

The slotting tool 1 can be used independently, if it's mounted to a frame with a motor and a battery, as well as an adapter for different types of grinder, grinding machine or other suitable machines.

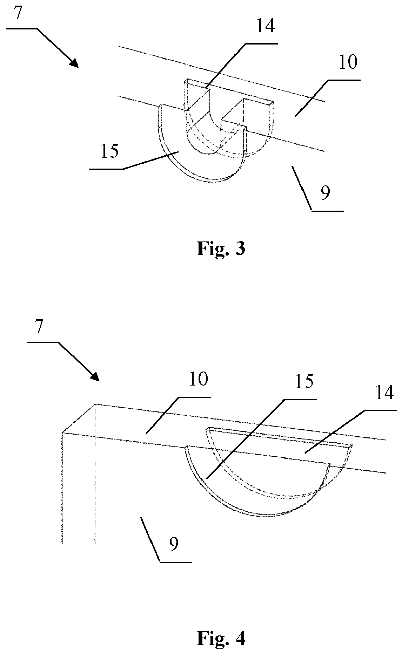

According to the invention, a method for slot milling into a cladding panel 7 is also created, which has four lateral sides 10 and two opposing, facing sides 8, 9 first and second facing side, respectively, which method involves a machine with an installed slotting tool 1, which is used to mill at least one slot 14 into at least one lateral side 10 of the cladding panel 7. By the use of the slotting tool 1, according to the invention, at least one pair of parallel slot 14 and groove 15 are milled, as shown in fig. 4. The distance between the discs 2, 3 of the slotting tool 1 has to be bigger than half of the thickness of the cladding panel 7, for instance, it can be equal to 3/4 of the thickness of the panel 7 or use a different proportion. The groove 15 is milled by taking away material with one of the slotting discs 2 of the slotting tool 1 from the second facing side 9 of the panel 7, and its parallel slot 14 is milled by slotting from the other slotting disc 3 of the slotting tool 1 into an area of one of the lateral sides 10 of the panel 7, located between the middle of the width of the lateral side 10 (the thickness of the panel) and the first facing side 8 of the panel 7.

It is preferable for the slot 14 and the groove 15 to correspond in shape. Alternatively, they can have different shapes, which depends on the shape of the discs 2,3 of the slotting tool 1 and also on the shape of the fastening ribs 11, 12 of the used holders 13 for the panel 7.

The groove 15 is made with the aim to always preserve the thickness of the panel 7 between the slot 14 and the groove 15, which allows the holder 13 of the panel 7 to envelop that thickness and bear the entire load.

A good-looking façade is achieved by milling at the same distance between the slot 14 and the first facing side 8 of the panel 7.

The repositioning of the slot 14 to the first facing side 8 of the panel 7 allows for thickening of the rear part B of the panel 7, from the slot 14 to the second facing side 9, by up to 50%, which, respectively, increases the strength indices of the panel 7 in the place for fastening and the reliability of the overall construction, because it is precisely the part of the panel 7 between the second facing side 9 and the slot 14 that bears the load. The part between the slot 14 and the first facing side 8 of the panel 7 does not bear any load, therefore it can be very thin and material can be saved. On the whole, this allows the use of thinner panels.

According to the invention, on one lateral side 10 of the cladding panel 7 is where at least two pairs of slot 14 and groove 15 are milled, in which case all slots 14 are milled at the same distance from the first facing side 8 of the panel 7.

In an embodiment of the invention, the slot 14 and the groove 15 have a half-moon shape.

In an embodiment of the invention, the slotting tool 1 has a slotting sleeve 6 with at least one longitudinally positioned, parallel to the axis of the slotting sleeve, slotting edge, which, during the slot 14 milling, mills a U-shaped groove, shown in fig. 3, between each pair of parallel slot 14 and groove 15, in which case the depth of every slot 14 milled like that is bigger than the radius of the slotting discs 2, 3 of the slotting tool. Thus, it becomes possible to use the discs 2, 3 with a smaller diameter for milling deeper slots 14, in which case the length of the slot 14 is shorter than that of a slot with a semicircular shape.

The cladding panel 7, according to the invention, has four lateral sides 10 and two opposing, facing sides 8, 9 first and second facing side, respectively. On at least one of the facing sides 10 there is at least one pair of milled parallel slot 14 and groove 15, which are milled using the slot milling method, according to the invention. The groove 15 is milled into the second facing side 9 of the panel 7 adjacent to the lateral side 10, and its parallel slot 14 is milled in an area of the mentioned lateral side 10 of the panel 7, located between the middle of the width of the lateral side 10 and the first facing side 8 of the panel 7. The distance between the second facing side 9 of the panel 7 with a milled groove 15 and its corresponding parallel slot 14 is greater than the distance between the first facing side 8 of the panel 7 and the slot 14. This construction ensures an increase in both thickness and strength indices of the back part B of the panel 7, which bears the wind load on both sides.

It is preferable for the slot 14 and the groove 15 to correspond in shape and are, respectively, milled with a slotting tool 1, according to the invention, which have two slotting discs 2, 3 with an identical diameter. Alternatively, the slot 14 and the groove 15 can have a different shape and/or size, which are milled with a slotting tool 1, according to the invention, which has two slotting discs 2, 3 with different diameters.

In an embodiment of the invention, on at least one of the lateral sides 10 of the cladding panel 7 there are at least two pairs of slot 14 and groove 15, where all the slots 14 and grooves 15 are located at the same distance from the first facing side 8 of the panel 7.

As clarified above, between each pair of parallel slot 14 and groove 15 is where a U-shaped groove is milled, where the depth of each slot 14 and each groove 15 is greater than half the width of the slots 14 and the grooves 15.

It is preferable for the cladding panel 7 to be manufactured from natural material, such as marble, granite, limestone, travertine.

After the cutting of the natural material into separate panels, and subsequent grinding, the panels have different thickness, therefore nominal value and tolerances by standard.

It is preferable for the thickness of the panel 7 between the slot 14 and its first facing side 8 is greater than or equal to 1,5 mm and smaller than or equal to 3 mm.

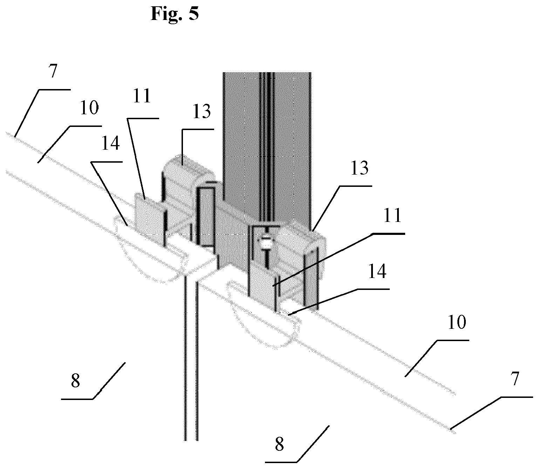

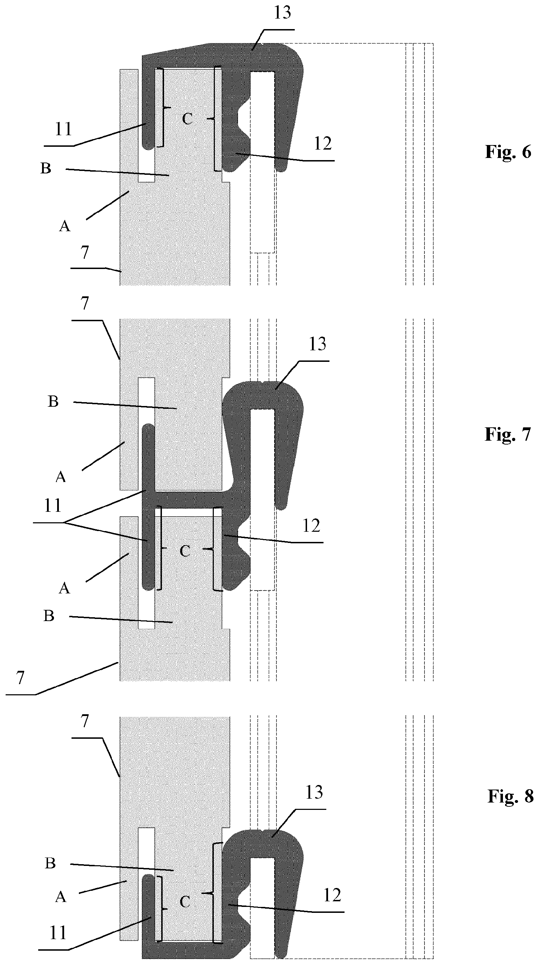

According to the invention, a method for fastening of cladding panels 7 to a load-bearing subconstruction of a building is created, where, laterally, into at least one cladding panel 7 slots 14 are being milled with a slotting tool 1 and through those slots 14 at least one cladding panel 7 is fastened to the load-bearing subconstruction through holders 13 with two fastening ribs 11, 12, the surfaces of which, making contact with at least one cladding panel 7, are located in two parallel planes, where one of the fastening ribs 11 of each holder 13 is inserted into one of the mentioned slots 14 of the cladding panel 7, as shown in fig. 5. The holders 13 have a device for fastening to the load-bearing subconstruction, like, for example, one or more openings for fastening elements hooks with or without arrester rods or arrester plates, or another suitable means for fastening, known from the state of the art, as each of the mentioned devices can be additionally fastened with a fixing element, like for example a screw or a rivet, to the load-bearing subconstruction. As shown in figures 6, 7 and 8, in an embodiment of the invention, the holders 13 are monolithic details with a hook-like end, which suspends on an arrester rod that is fixed to an element of the load-bearing subconstruction, thus the hook-shaped end of the holder 13 bears its weight and the weight of the panel 7 that is hooked onto the holder 13. The hook-like end is connected to one of the fastening ribs 12 of the holder 13, which in the listed examples lies against the load-bearing subconstruction. This fastening rib 12 is connected to a second fastening rib 11, where the surfaces of the two fastening ribs 11, 12, which makes contact with the at least one cladding panel 7, are positioned in two parallel planes. The two fastening ribs 11, 12 are connected via a plate, perpendicular to the two fastening ribs 11, 12, thus the fastening ribs 11, 12 of the holder 13 have an H-shaped section in case the holder 13 is used for fastening of two neighboring panels 7, as shown in figure 7, or a U-shaped section in case the holder 13 is used only for fastening a single panel 7, as shown in figures 6 and 8. The fastening rib 12, which is connected to the hook-like end of the holder 13, can have a straight or undulatory surface on the side of the cladding panel 7. As shown in figure 7, it is possible to make a holder 13 that has the fastening rib 12, connected with the hook-like end of the holder 13, has an undulatory surface on the side of the load-bearing subconstruction, which is featured for the purpose of better strength indices of the holder 13. The holders 13 can be made of different materials like aluminum or steel, as long as it is possible for the distance between the ribs 11, 12 of the holder 13 is equal to the width of the panel 7 between the slot 14 and the groove 15.

The cladding panels 7 are in accordance with the invention, wherein in a cladding panel 7 at least one pair of parallel slot 14 and groove 15 are laterally milled by the use of a slotting tool 1 according to the invention. The second facing side 9 of the cladding panel 7, into which the groove 15 is milled, lies against the load-bearing subconstruction. The distance between the at least one pair of slot 14 and groove 15 is equal to the width between the fastening ribs 11, 12 of the holder 13 for a cladding panel 7. One of the fastening ribs 11 of the holder 13 is inserted into the slot 14 of the cladding panel 7, and the other fastening rib 12 is inserted into the groove 15 of the second facing side 9 of the cladding panel 7. The depth of the at least one pair of slot 14 and groove 15 must be equal to or greater than the height C of the fastening ribs 11, 12 of the holder 13. This height C represents the distance from the end of the respective rib connected to the plate that connects the ribs 11, 12 to the opposite disengaged end of the same rib.

It is preferable for one cladding panel 7 is fastened by at least four holders 13 - two below and two above. In relation to that, four pairs of slot 14 and groove 15 are also milled, two in one of the lateral sides 10 and two in the opposite lateral side 10.

The reference numbers of the technical indices are included in the claims only for the purpose of increasing the intelligibility of the claims and, therefore, these reference numbers have no limiting effect regarding the interpretation of the elements, marked by these reference numbers.

## Claims

1. A slotting tool for cladding panels, including a shaft with a first slotting disc immovably fixed to it, **characterized in that** a second slotting disc (3), parallel to the first slotting disc (2) and located at a distance from it is immovably fixed to the shaft (4).

2. Slotting tool for cladding panels according to claim 1, **characterized in that** the two slotting discs (2, 3) have the same diameter.

3. Slotting tool for cladding panels according to claims 1 or 2, **characterized in that** the first slotting disc (2) is welded to one end of the shaft (4), and the second slotting disc (3) is welded to a collet (5) holder, located on the shaft (4) with a possibility for repositioning along the shaft (4).

4. Slotting tool for cladding panels according to claims 1 or 2, **characterized in that** both slotting discs (2, 3) are welded to the shaft (4), wherein a slotting sleeve (6) is also welded between the slotting discs (2, 3) to the shaft (4), which slotting sleeve (6) has at least one longitudinally positioned, which is parallel to the axis of the slotting sleeve (6), wherein the diameter of the slotting sleeve (6) is smaller than the diameter of the slotting discs (2, 3).

5. Method for slot milling into a cladding panel that has four lateral sides and two opposing facing sides, first and second facing side, respectively, which method involves a machine with a slotting tool mounted to it, used for milling of at least one slot in at least one lateral side of the cladding panel, **characterized in that** by use of the slotting tool (1) according to any of the claims from 1 to 4, including a shaft (4) with first and second slotting discs (2, 3) immovably fixed to it, located parallel to each other and at a distance to each other greater than half the thickness of the cladding panel (7), at least one pair of parallel slot (14) and groove (15) are milled, wherein the groove (15) is milled by taking away material with one of the slotting discs (2) of the slotting tool (1) from the second facing side (9) of the panel (7), and the parallel slot (14) is milled by the other slotting disc (3) of the slotting tool (1) in an area of one of the lateral sides (10) of the panel (7), located between the middle of the width of the lateral side (10) and the first facing side (8) of the panel (7).

6. Method for slot milling into cladding panels according to claim 5, **characterized in that** in one lateral side (10) of the cladding panel (7) at least two pairs of slot (14) and groove (15) are milled, thus all slots (14) are milled at the same distance from the first facing side (8) of the panel (7).

7. Method for slot milling into cladding panels according to claims 5 or 6, **characterized in that** the slotting tool (1) has a slotting sleeve (6) with at least one longitudinally positioned, parallel to the axis of the slotting sleeve, slotting edge, which, during the milling of the slots (14) mills a U-shaped groove between each pair of parallel slot (14) and groove (15), wherein the depth of each slot (14) is greater than the radius of the slotting discs (2, 3) of the slotting tool (1).

8. Cladding panel with four lateral sides and two opposing facing sides, first and second facing side, respectively, **characterized in that** on at least one of the lateral sides (10) of the panel (7) there is at least one milled pair of parallel slot (14) and groove (15), made using the method for slot milling according to claims 5 or 6, wherein the groove (15) is milled into the second facing side (9) of the panel (7) adjacent to the lateral side (10), and its parallel slot (14) is milled into an area of the mentioned lateral side (10) of the panel (7), located between the middle of the width of the lateral side (10) and the first facing side (8) of the panel (7), wherein the distance between the second facing side (9) of the panel (7) with a milled groove (15) and its corresponding parallel slot (14) is greater than the distance between the first facing side (8) of the panel (7) and the slot (14).

9. Cladding panel according to claim 8, **characterized in that** on at least one of the lateral sides (10) of the cladding panel (7) there are at least two pairs of slot (14) and groove (15), wherein all slots (14) and grooves (15) are located at the same distance from the first facing side (8) of the panel (7).

10. Cladding panel according to claims 8 and 9, **characterized in that** a U-shaped groove is milled between each pair of parallel slot (14) and groove (15), wherein the depth of each slot (14) and each groove (15) is greater than half the width of the slots (14) and the grooves (15).

11. Cladding panel according to claims 7 to 10 **characterized in that** it is made of natural material.

12. Cladding panel according to claims 7 to 11, **characterized in that** the thickness of the panel (7) between the slot (14) and its first facing side (8) is greater than or equal to 1,5 mm and smaller or equal to 3 mm.

13. Cladding panel according to claims 7 to 12 **characterized in that** the at least one pair of parallel slot (14) and groove (15) correspond in shape.

14. Method for fastening of cladding panels to a load-bearing subconstruction of a building, wherein, laterally, on at least one cladding panel with four lateral sides and two opposing facing sides, first and second side, respectively, slots are milled with a slotting tool, by which slots the at least one cladding panel is fastened to the load-bearing subconstruction via holders with two fastening ribs, the surfaces of which making contact with the at least one cladding panel, are positioned in two parallel planes, wherein one of the fastening ribs of each holder is inserted into one of the mentioned slots of the cladding panel, **characterized in that** it includes a step of milling of at least one pair of parallel slot (14) and groove (15) laterally on the at least one cladding panel (7) using the method for slot (14) milling into a cladding panel (7) according to claims 5 to 7, wherein the grooves (15) are milled by taking away material by one of the slotting discs (2) of the slotting tool (1) from the second facing side (9) of the panel (7), and its parallel slot (14) is milled by the other slotting disc (3) of the slotting tool (1) into an area of one of the lateral sides (10) of the panel (7), located in between the middle of the width of the lateral side (10) and the first facing side (8) of the panel (7), wherein the milling is made by the use of the slotting tool (1) according to claims 1 to 4, including a shaft (4) with immovably fixed first and second slotting discs (2, 3) to it, located parallel to each other and at a distance from each other, for reception of the at least one cladding panel (7) according to claims 7 to 13, wherein the distance between the second facing side (9) of the panel (7) with a milled groove (15) and its corresponding parallel slot (14) is greater than the distance between the first facing side (8) of the panel (7) and the slot (14), wherein the second facing side (9) of the at least one cladding panels (7), into which the groove (15) is milled, lies against the load-bearing subconstruction, and wherein the thickness of the panel (7) between a slot (14) and its corresponding groove (15) from one pair of slot (14) and groove (15) is equal to the distance between the fastening ribs (11, 12) of the holder (13) for a cladding panel (7), wherein one of the fastening ribs (11) of the holder (13) is inserted into the slot (14) of the cladding panel (7), and the other fastening rib (12) is inserted into the groove (15) of the second facing side (9) of the cladding panel (7), and wherein the depth of the at least one pair of slot (14) and groove (15) is equal to or greater than the height (C) of the fastening ribs (11, 12) of the holder (13).
